# EUROPÄISCHE PATENTSCHRIFT

(11) **EP 3 092 154 B1**
(45) Veröffentlichungstag und Bekanntmachung des Hinweises auf die Patenterteilung: **02.05.2018**
(21) Anmeldenummer: 14827762.7
(22) Anmeldetag: 22.12.2014
(51) Int. Cl.: B60R 7/00

(54) **VORRICHTUNG ZUR AUFNAHME VON GEBRAUCHSGEGENSTÄNDEN**
DEVICE FOR RECEIVING USEFUL OBJECTS
DISPOSITIF DE RÉCEPTION D'OBJETS USUELS

(30) Priorität: 10.01.2014 DE 102014200370; 20.02.2014 DE 102014203119
(43) Veröffentlichungstag der Anmeldung: 16.11.2016
(73) Patentinhaber: H.R. Rathgeber GmbH & Co. KG, 89542 Herbrechtingen (DE)
(72) Erfinder: GENTNER, Wilfried, 89522 Heidenheim (DE); BADER, Dietmar, 89568 Hermaringen (DE)
(74) Vertreter: Dr. Weitzel & Partner
(86) Internationale Anmeldenummer: PCT/EP2014/078972
(87) Internationale Veröffentlichungsnummer: WO 2015/104179

(56) Entgegenhaltungen:
- DE-A1- 2 242 472
- DE-A1- 19 739 091
- DE-U1- 20 120 090
- FR-A1- 2 967 951
- GB-A- 2 468 566

## Beschreibung

Die vorliegende Erfindung betrifft eine Vorrichtung zur Aufnahme von Gebrauchsgegenständen gemäß dem Oberbegriff von Anspruch 1.

Gattungsgemäße Vorrichtungen sind beispielsweise aus Reisebussen oder Schienenbussen bekannt, bei welchen auf der Rückseite der Fahrgastsitze Netze mittels eines Metallbügels oder durch eine Vielzahl angeschraubter Konsolen gehalten sind, wobei die Netze eine Wand einer Tasche ausbilden, sodass die Tasche zwei aufeinanderliegende Seiten aufweist, eine gebildet durch die dem Netz zugewandte Oberfläche des Fahrgastsitzes und die andere gebildet eben durch das Netz.

Die gattungsgemäßen Vorrichtungen weisen den Nachteil auf, dass eine auch optisch ansprechende Befestigung des Netzes als flächiger Aufnahmekörper vergleichsweise aufwändig ist, da die einzelnen Befestigungspunkte des Netzes an der rückseitigen Oberfläche des Fahrgastsitzes exakt ausgewählt werden müssen und versucht werden muss, eine möglichst gleichmäßige Spannung auf das Netz aufzubringen.

DE 2 242 472 A beschreibt eine Vorrichtung gemäß dem Oberbegriff des Anspruchs 1, wobei ein Gepäcknetz für Rücklehnen von Fahrzeugsitzen mit einem elastischen Aufnahmekörper, der eine seitliche Taschenwand ausbildet und mit seinen Netzschlaufen an starren Rahmenteilen gehalten ist. Die einzelnen Netzschlaufen müssen in diese seitlichen Rahmenteile eingefädelt werden, werden dort mehr oder weniger verklemmt, was im Gebrauch dazu führt, dass die Schlaufen innerhalb der Rahmenteile verrutschen, in der verrutschten Position verklemmt in den Rahmenteilen gehalten werden und die durch das Netz gebildete seitliche Taschenwand dadurch verzogen und unansehnlich wird. DE 197 39 091 A1 offenbart eine Vorrichtung zur Aufnahme von Gebrauchsgegenständen gemäß dem Oberbegriff des Anspruchs 2. DE 201 20 090 U1 beschreibt ein weiteres Haltenetz, bei welchem ein Draht durch die Randmaschen des Netzes gezogen wird und anschließend in Clipshalterungen von Kunststoffleisten fixiert wird. Auch hier ergeben sich die zuvor genannten Nachteile, wie bereits aus den fotografischen Darstellungen der Figuren der Druckschrift ersichtlich ist. Der vorliegenden Erfindung liegt daher die Aufgabe zugrunde, eine Vorrichtung zur Aufnahme von Gebrauchsgegenständen anzugeben, deren Montage auch durch einen Laien problemlos durchgeführt werden kann, sodass ein optisch ansprechendes Ergebnis erzielt wird, wobei die Vorrichtung und an den unterschiedlichsten Wänden oder Decken befestigbar sein soll und die Vorrichtung zur Aufnahme von Gebrauchsgegenständen vielseitig einsetzbar sein soll.

Die erfindungsgemäße Aufgabe wird durch eine Vorrichtung mit den Merkmalen der unabhängigen Ansprüche gelöst. In den abhängigen Ansprüchen sind vorteilhafte und besonders zweckmäßige Ausgestaltungen der Erfindung beschrieben.

Die erfindungsgemäße Vorrichtung zur Aufnahme von Gebrauchsgegenständen, beispielsweise von Bad-, Küchen- oder sonstigen Utensilien weist einen flächigen Aufnahmekörper mit einem äußeren Umfang auf. Der flächige Aufnahmekörper kann entweder allein eine Tasche ausbilden, indem er zwei aufeinanderliegende Taschenwände aufweist, die die Gebrauchsgegenstände eingeführt über eine entsprechende Eingriffsöffnung zwischen sich aufnehmen können, oder der Aufnahmekörper bildet nur eine seitliche Wand einer Tasche aus, die dann zusammen mit jener Wand, an welcher die Vorrichtung zur Aufnahme von Gebrauchsgegenständen montiert wird, eine entsprechende Tasche bildet.

Demgemäß weist die erfindungsgemäße Vorrichtung wenigstens eine Konsole auf, mittels welcher der Aufnahmekörper an einer Wand befestigbar ist. Diese Konsole kann auch als Wandkonsole bezeichnet werden. Unter dem Begriff "Wand" sind dabei nicht nur vertikale oder im wesentlichen vertikale Wände zu verstehen, sondern beliebige andere Wände von Gebäuden, Fahrzeugen und/oder anderen Einrichtungen, die auch waagerecht, beispielsweise in Form einer Decke oder eines Bodens ausgerichtet sein können. Gemäß einer Ausführungsform bezeichnet der Begriff "Wand" eine Tischplatte, an welcher die Konsole, insbesondere an deren Unterseite befestigt wird.

Erfindungsgemäß weist nun die Konsole einerseits eine Montageplatte und andererseits eine Abdeckplatte auf, wobei die Montageplatte und die Abdeckplatte als getrennte Bauteile hergestellt sind oder zumindest relativ zueinander beweglich sind. Gemäß einer Ausführungsform besteht die Konsole ausschließlich aus der Montageplatte und der Abdeckplatte.

Die Abdeckplatte ist reibschlüssig und/oder formschlüssig derart auf die Montageplatte aufgesteckt oder aufsteckbar, dass der flächige Aufnahmekörper zumindest entlang von einem oder von zwei einander gegenüberliegenden Abschnitten des äußeren Umfangs zwischen der Montageplatte und der Abdeckplatte eingeschlossen ist beziehungsweise wird. Auch wenn das Einschließen eines einzigen Abschnittes des Umfangs ausreichen kann, wird vorteilhaft eine Vorspannung auf den Aufnahmekörper dadurch aufgebracht, dass dieser unter Vorspannung entlang von zwei oder mehr Abschnitten eingeschlossen wird.

Besonders vorteilhaft weist die erfindungsgemäße Vorrichtung wenigstens zwei Konsolen mit wenigstens einer Montageplatte und einer Abdeckplatte auf, wobei von den beiden Konsolen jeweils eine einen der gegenüberliegenden Abschnitte des äußeren Umfangs des Aufnahmekörpers einschließt. Die beiden Konsolen beziehungsweise deren Abdeckplatten und Montageplatten können in ihrer äußeren Formgebung spiegelbildlich und/oder identisch zueinander gestaltet sein, was bedeutet, dass die Abdeckplatte der ersten Konsole in ihrer äußeren Form der Abdeckplatte der zweiten Konsole entspricht beziehungsweise spiegelbildlich zu dieser gestaltet ist und die Montageplatte der ersten Konsole entsprechend identisch oder spiegelbildlich zu der Montageplatte der zweiten Konsole gestaltet ist. Es kommt jedoch alternativ auch in Betracht, dass die erste Konsole und die zweite Konsole verschieden groß, insbesondere verschieden lang ausgeführt sind.

Gemäß einer alternativen Ausführungsform der Erfindung sind die Montageplatte und die Abdeckplatte Bestandteil der Konsole und stehen einander derart gegenüber, dass sie einen Einschlussbereich für einen Abschnitt des äußeren Umfangs des Aufnahmekörpers ausbilden. Die Montageplatte und die Abdeckplatte können in diesem Fall einteilig miteinander und insbesondere mit dem verbleibenden Rest der Konsole ausgeführt sein. Alternativ ist eine mehrteilige Ausführungsform vorgesehen. Auch bei einer solchen Ausführungsform weist der Aufnahmekörper einen Materialstreifen entlang zumindest eines Abschnitts des äußeren Umfangs auf und ist mit diesem Materialstreifen zwischen der Montageplatte und der Abdeckplatte eingeschlossen, insbesondere eingeklemmt.

Bei der dargestellten zweiten Ausführungsform der Erfindung kann die Konsole beispielsweise aus einem abgewinkelten Blech einteilig hergestellt sein.

Besonders vorteilhaft weist bei dieser zweiten Ausführungsform der Erfindung die Konsole eine Basis auf, mit welcher sie an der Wand oder dergleichen befestigbar ist, indem sie beispielsweise Bohrungen zum Durchführen von Schrauben aufweist, sowie einen Steg, der senkrecht oder winklig auf der Basis steht und die Montageplatte sowie die Abdeckplatte entfernt von der Basis trägt, sodass der Aufnahmekörper entfernt zur Wand und insbesondere parallel zu dieser positioniert ist, um eine Art Box zwischen der Wand und dem Aufnahmekörper einerseits und bei Vorsehen von zwei gegenüberstehenden Konsolen zwischen den beiden Konsolen andererseits auszubilden. Auch ist es möglich, dass die Konsolen über einen unteren Boden miteinander verbunden sind, um die ausgebildete Box nach unten abzuschließen.

Vorteilhaft sind die Montageplatte und die Abdeckplatte parallel zur Basis ausgerichtet.

Solche zwei Konsolen können bei jeder der genannten Ausfürhungsformen beispielsweise als lang ausgestreckte Körper vertikal oder im Wesentlichen vertikal ausgerichtet sein und den Aufnahmekörper in Horizontalrichtung zwischen sich einschließen. Dabei kann ergänzend eine dritte Konsole im Bereich eines unteren Abschnitts des äußeren Umfangs des Aufnahmekörpers vorgesehen sein, wobei diese dritte Konsole dann in der Regel von der ersten Konsole bis zur zweiten Konsole reicht oder unterhalb von diesen oder am unteren Rand von diesen zwischen diesen positioniert ist. Selbstverständlich kommt auch eine andere Ausrichtung von zwei oder drei Konsolen in Betracht, beispielsweise die Positionierung einer oberen Konsole im Bereich des Abschnitts oben am Umfang des Aufnahmekörpers und einer zweiten Konsole entsprechend an einem Abschnitt unten am Umfang des Aufnahmekörpers, sodass eine Eingriffsöffnung in den Aufnahmekörper oder hinter den Aufnahmekörper recht und/oder links vorgesehen sein kann.

Der Aufnahmekörper kann insbesondere eine rechteckige, insbesondere quadratische Form aufweisen, sodass zwei oder drei Seiten des Aufnahmekörpers entsprechend durch jeweils eine Konsole zwischen deren Montageplatte und Abdeckplatte gehalten wird. Der Aufnahmekörper ist vorteilhaft aus einem elastischen Material, insbesondere elastischen textilen Material hergestellt. Beispielsweise kommt hierfür ein Gewebe, Gewirke, Gestricke, ein Vliesstoff oder anderes, beispielweise ein Geflecht, in Betracht.

Gemäß der Erfindung weist der Aufnahmekörper einen Aufnahmebereich mit einer seitlichen Taschenwand oder mit zwei aufeinander positionierten seitlichen Taschenwänden auf. Im letzteren Fall sind die beiden seitlichen Taschenwände in der Regel entlang des äußeren Umfangs bis auf eine Eingriffsöffnung zur Ausbildung einer Tasche miteinander verbunden. Der Aufnahmekörper weist in den Abschnitten des äußeren Umfangs, die zwischen der Montageplatte und der Abdeckplatte einer oder mehrerer Konsolen eingeschlossen werden, jeweils einen Materialstreifen auf, der sich entlang des entsprechenden Abschnitts des äußeren Umfangs, insbesondere entlang jeweils des gesamten Abschnitts des äußeren Umfangs erstreckt. Der Materialstreifen ist aus einem gegenüber dem Aufnahmebereich, das heißt der oder den Taschenwänden, verschiedenen Material hergestellt, beispielsweise aus einem nicht elastischen Material, insbesondere aus Plastik beziehungsweise Kunststoff. Solche äußeren, insbesondere seitlichen Materialstreifen können bei Ausführung des Aufnahmekörpers aus einem netzförmigen Material, beispielsweise hergestellt durch Weben, auch als Netzhalter bezeichnet werden, die entsprechend zwischen die Abdeckplatte und die Montageplatte der Konsolen eingelegt werden. Solche Materialstreifen sind insbesondere entlang des gesamten zugeordneten Abschnitts des äußeren Umfangs, beispielsweise entlang einer gesamten Seite eines rechteckigen, vieleckigen oder quadratischen Aufnahmekörpers an diesem befestigt, beispielsweise angenäht. Dies bewirkt, dass mit dem Einlegen der Materialstreifen in die an einer Wand befestigten Konsolen beziehungsweise deren Montageplatten eine gleichmäßige Spannung auf den gesamten Aufnahmekörper, insbesondere das Netz, aufgebracht wird, wobei ein mühsames Einfädeln einzelner Befestigungspunkte des Netzes vermieden wird. Besonderes vorteilhaft weisen die Montageplatten und/oder die Materialstreifen eine Klett- und/oder Rasteinrichtung auf und/oder bilden miteinander eine Hinterschneidung beim Aufbringen der Materialstreifen auf die Montageplatten, derart, dass nach dem Aufbringen, insbesondere Aufschieben ein unbeabsichtigtes Herunterfallen der Materialstreifen von den Montageplatten durch einen Formschluss vermieden wird.

Besonders vorteilhaft weisen die Materialstreifen eine Vielzahl von entlang des Abschnitts des äußeren Umfangs des Aufnahmekörpers (bezogen auf den montierten Zustand) hintereinander positioniert Durchbrüche auf, die im eingeschlossenen Zustand der Materialstreifen zwischen den Montageplatten und den Abdeckplatten Vorsprünge der Montageplatten und/oder der Abdeckplatten unverlierbar umschließen. Die Vorsprünge sind insbesondere gegengleich zu den Durchbrüchen in den Materialstreifen gestaltet, so dass die Materialstreifen auf den Montageplatten beziehungsweise gegenüber den Abdeckplatten zentriert werden.

Obwohl zuvor zwei Materialstreifen beschrieben wurden, kann auch einer ausreichen.

Besonders vorteilhaft weist die Montageplatte eine Vielzahl von Vorsprüngen auf, die jeweils durch eine aus der Montageplatte herausragende Umfangswand mit einer sich anschließenden Stirnseite gebildet werden, wobei zumindest ein Vorsprung an seiner Umfangswand eine Rastnase aufweist, an welcher der Materialstreifen beim Überschieben des entsprechenden Durchbruchs auf dem Vorsprung einrastet. Die Rastnase kann insbesondere durch eine in Aufschubrichtung des Materialstreifens zunehmend vorstehende Anschrägung gebildet werden, über welche der Materialstreifen beim Aufschieben auf die Montageplatte unter elastischer Verformung des Materialstreifens und/oder der Anschrägung hinwegrutscht, um anschließend hinter der Anschrägung in einer Hinterschneidung positioniert zu sein.

Die Montageplatte und/oder die Abdeckplatte ist vorteilhaft einteilig ausgeführt.

Die Montageplatte und/oder die Abdeckplatte ist vorteilhaft aus Kunststoff, insbesondere im Spritzgussverfahren hergestellt.

Die Montageplatte weist vorteilhaft eine Vielzahl von Vorsprüngen auf, die jeweils durch eine aus der Montageplatte herausragende Umfangswand mit einer sich anschließenden Stirnseite gebildet werden, wobei die Stirnseite wenigstens eines Vorsprungs eine Öffnung aufweist, in welche ein Rasthaken oder ein Zentrierstift der Abdeckplatte, der auf einer der Montageplatte zugewandten Oberfläche der Abdeckplatte aus dieser herausragt, im aufgesteckten Zustand der Abdeckplatte auf der Montageplatte formschlüssig eingreift. Besonders vorteilhaft ist wenigstens ein erster Vorsprung auf der Montageplatte auf seiner Stirnseite mit einer ersten Öffnung versehen, in welche ein Rasthaken der Abdeckplatte im aufgesteckten Zustand der Abdeckplatte auf die Montageplatte eingreift, und ferner ist ein zweiter Vorsprung auf der Montageplatte auf seiner Stirnseite mit einer zweiten Öffnung versehen, in welche ein Zentrierstift der Abdeckplatte im aufgesteckten Zustand der Abdeckplatte auf die Montageplatte eingreift. Insbesondere sind mehrere erste Vorsprünge mit ersten Öffnungen und mehrere zweite Vorsprünge mit zweiten Öffnungen auf einer Montageplatte vorgesehen.

Die zweite(n) Öffnung(en) kann/können einen kleineren Querschnitt als die erste(n) Öffnung(en) aufweisen und/oder die erste(n) Öffnung(en) kann/können in ihrem Querschnitt oval oder eckig und die zweite(n) Öffnung(en) kann/können in ihrem Querschnitt kreisrund sein.

Gemäß einer Ausführungsform der Erfindung weist die Abdeckplatte wenigstens einen oder eine Vielzahl von Rasthaken auf, die derart angeordnet sind, dass sie beim Aufstecken der Abdeckplatte auf die Montageplatte in Öffnungen der Montageplatte einrasten und/oder die Montageplatte weist wenigstens einen oder eine Vielzahl von Rasthaken auf, die derart angeordnet sind, dass sie beim Aufstecken der Abdeckplatte auf die Montageplatte in Öffnungen der Abdeckplatte einrasten, und der wenigstens eine Rasthaken ist im eingerasteten Zustand derart von einer äußeren Umwandung der Abdeckplatte und/oder der Montageplatte in einem durch die Abdeckplatte und/oder die Montageplatte gebildeten Innenraum der Konsole gegenüber der Umgebung abgeschirmt, dass ein zerstörungsfreier entrastender Zugriff von außen verhindert wird. Um dennoch eine Entrastung und somit eine Demontage der Vorrichtung von einer Wand, an der sie befestigt ist, zu ermöglichen, ohne die gesamte Vorrichtung zu zerstören, kann auf einer äußeren Oberfläche der Abdeckplatte und/oder der Montageplatte wenigstens ein Bohrlochansatz eingebracht sein, welcher derart relativ zu einem Rasthaken positioniert ist, dass durch Durchbohren der Abdeckplatte und/oder der Montageplatte in dem Bohrlochansatz ein Entrasten des Rasthakens ermöglicht wird, indem dieser beispielsweise zerstört wird. Es muss dann zur erneuten Verwendung und Montage der erfindungsgemäßen Vorrichtung lediglich ein Bauteil, in welchem der Rasthaken vorgesehen ist, ausgetauscht werden, beispielsweise die Abdeckplatte.

Um die Montageplatte an einer Wand festschrauben zu können, ist es günstig, dass die Montageplatte eine Vielzahl von Einsenkungen zur Aufnahme von Schraubenköpfen aufweist. Prinzipiell sind jedoch auch andere Befestigungsmöglichkeiten der Montageplatte möglich, beispielsweise das Verkleben, Verklemmen oder ein anderes formschlüssiges Verbinden, wie Einrasten oder Einhaken der Montageplatte an der Einrichtung, an welcher die erfindungsgemäße Vorrichtung befestigt werden soll. Beispielsweise kann die Montageplatte hierfür entsprechende Klemmeinrichtungen, Haken oder auch Klebestreifen aufweisen.

Gemäß einer Ausführungsform der Erfindung wird die erfindungsgemäße Vorrichtung zur Aufnahme von Gebrauchsgegenständen als Kabelhalter ausgeführt beziehungsweise verwendet. Ein solcher Kabelhalter kann beispielsweise unterhalb einer Tischplatte oder an sonstigen Bauteilen eines Tisches oder einer anderen Einrichtung befestigt werden, um Kabel aufzunehmen, um ein sogenanntes Kabelmanagement zu ermöglichen.

Die Erfindung soll nachfolgend anhand eines Ausführungsbeispiels und den Figuren exemplarisch beschrieben werden.

Es zeigen:
- Figur 1: eine Draufsicht auf ein Ausführungsbeispiel einer erfindungsgemäßen Montageplatte;
- Figur 2: eine Draufsicht auf ein Ausführungsbeispiel einer erfindungsgemäßen Abdeckplatte;
- Figur 3: eine Draufsicht auf ein Ausführungsbeispiel eines erfindungsgemäßen Aufnahmekörpers;
- Figur 4: den Aufnahmekörper aus der Figur 3 aufgeschoben mit einem seiner beiden Materialstreifen auf eine erste Montageplatte und mit noch nicht aufgesetzter Abdeckplatte, wobei der zweite Materialstreifen noch nicht auf eine entsprechende Montageplatte aufgeschoben wurde;
- Figur 5: ein zweites Ausführungsbeispiel der Erfindung, bei welchem die beiden Konsolen die Montageplatte und die Abdeckplatte jeweils einteilig ausbilden und über einen unteren Boden miteinander verbunden sind;
- Figur 6: ein Ausführungsbeispiel der Erfindung ähnlich jenem der Figur 5, jedoch mit abweichend gehaltenem Materialstreifen in der Konsole;
- Figur 7: eine Konsole, wie sie gemäß dem Ausführungsbeispiel in der Figur 5, dort mit einem zusätzlichen Ausschnitt, oder gemäß der Figur 6 verwendet werden kann.

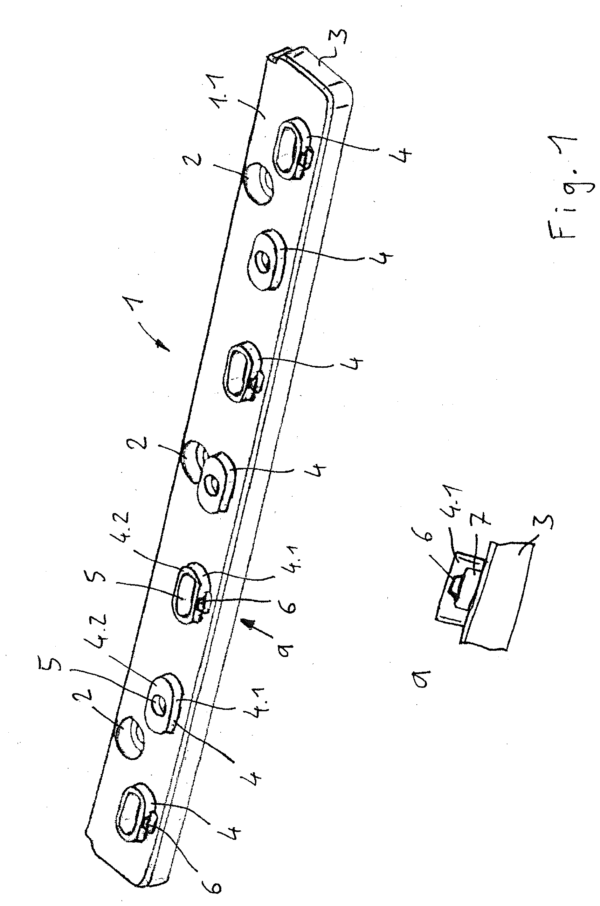

In der Figur 1 ist ein Ausführungsbeispiel für eine Montageplatte 1 dargestellt, wie sie für eine erfindungsgemäße Vorrichtung verwendet werden kann. Die Montageplatte 1 ist beispielsweise einteilig hergestellt, insbesondere aus Kunststoff durch Spritzgießen.

Wie man sieht, weist die Montageplatte 1 einen flächigen, leistenförmigen Grundkörper 1.1 auf, in welchem eine Vielzahl von Einsenkungen 2 vorgesehen sind, die bei der Montage der Montageplatte 1 an einer Wand mittels Schrauben (nicht dargestellt) die Schraubenköpfe aufnehmen, sodass diese insbesondere nicht aus dem flächigen Grundkörper 1.1 herausragen. Dabei ist es nicht notwendig, dass der flächige Grundkörper 1.1 massiv ausgeführt ist, vielmehr können die Einsenkungen 2 durch entsprechende Materialvorsprünge auf der Rückseite des Grundkörpers 1.1 gebildet werden, wobei vorteilhaft auch der in der Figur 1 dargestellte Rand 3 durch einen entsprechenden Materialvorsprung gebildet wird.

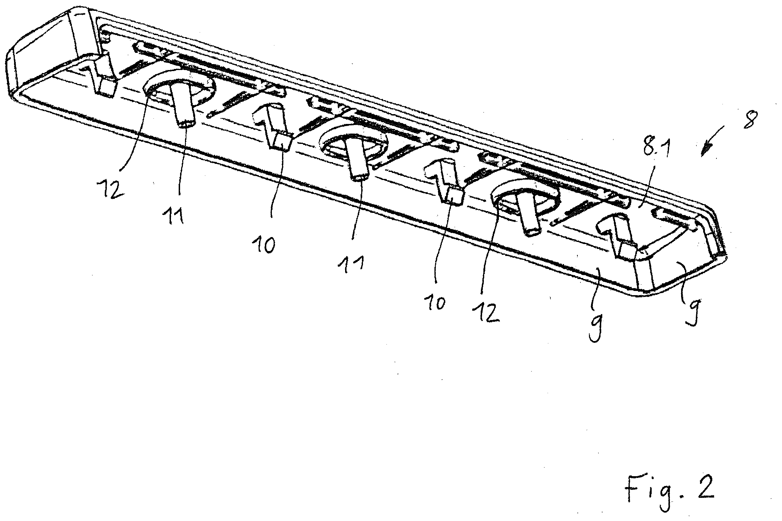

Auf der Vorderseite des Grundkörpers 1.1 ragen eine Anzahl von Vorsprüngen 4 heraus, die eine Umfangswand 4.1 und eine sich anschließende Stirnseite 4.2 aufweisen. Dabei sind erste Vorsprünge 4 vorgesehen, deren Stirnseiten 4.1 eine vergleichsweise größere Öffnung 5 aufweisen, und zweite Vorsprünge 4, deren Stirnseiten 4.2 eine vergleichsweise kleinere zweite Öffnung 5 aufweisen. Die vergleichsweise größere erste Öffnung 5 weist einen ovalen Querschnitt und die vergleichsweise kleinere Öffnung 5 weist einen kreisrunden Querschnitt auf. Die vergleichsweise größeren Öffnungen 5 dienen der Aufnahme von Rasthaken und die vergleichsweise kleineren Öffnungen 5 dienen der Aufnahme von Zentrierstiften einer Abdeckplatte, wie nachfolgend mit Bezug auf die Figur 2 noch beschrieben wird.

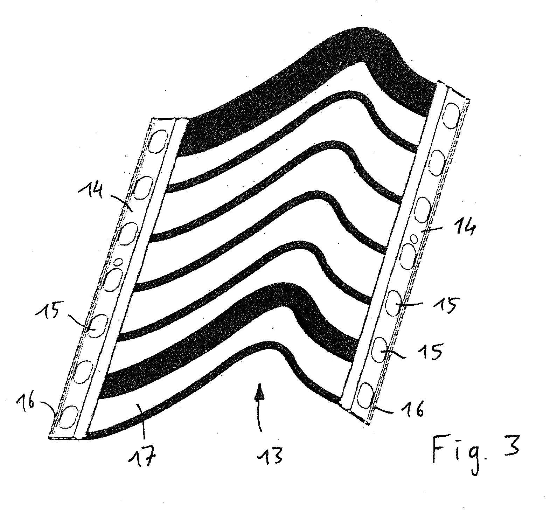

Ferner weist eine Anzahl von Vorsprüngen 4, hier exemplarisch die Vorsprünge 4 mit der vergleichsweise größeren Öffnung 5 auf ihrer Umfangswand 4.1 jeweils eine Rastnase 6 auf, über welche ein Materialstreifen des Aufnahmekörpers (in der Figur 3 dargestellt) beim Aufstecken hinwegrutscht und einrastet. Im Detail a ist eine solche Rastnase 6 in einer seitlichen Draufsicht auf die Montageplatte 1 gezeigt. Wie man sieht, ist in dem gezeigten Ausführungsbeispiel in Aufsteckrichtung hinter der Rastnase 6 ergänzend eine Aussparung 7 in der Umfangswand 4.1 vorgesehen, die sich bis in die Oberfläche des Grundkörpers 1.1 erstrecken kann, und die ein sicheres Aufnehmen eines Materialstreifens (Figur 3) des Aufnahmekörpers ermöglicht.

In der Figur 2 ist eine Abdeckplatte 8 dargestellt, die zur Montage der erfindungsgemäßen Vorrichtung auf die Montageplatte 1 aus der Figur 1 aufgesteckt wird, nachdem ein Materialstreifen des Aufnahmekörpers (siehe die Figur 3) auf die Montageplatte 1 aufgeschoben wurde. Die Abdeckplatte 8 kann ebenfalls einteilig und besonders aus Kunststoff im Spritzgussverfahren hergestellt sein. Im gezeigten Ausführungsbeispiel weist sie einen flächigen leistenförmigen Grundkörper 8.1 mit einer die Montageplatte 1 im aufgesteckten Zustand umschließenden Umwandung 9 auf. Auf der der Montageplatte 1.1 zugewandten Oberfläche des Grundkörpers 8.1 ragen eine Vielzahl von Rasthaken 10 hervor, sowie eine Vielzahl von Zentrierstiften 11. Selbstverständlich könnte eine andere Anzahl von Rasthaken 10 und/oder Zentrierstiften 11 als hier dargestellt vorgesehen sein. Im gezeigten Ausführungsbeispiel werden die Zentrierstifte 11 ferner von ringförmigen Vorsprüngen 12 umschlossen, welche die zugeordneten Vorsprünge 4 der Montageplatte 1 beim Aufstecken der Abdeckplatte 8 formschlüssig umschließen und dabei den entsprechenden Materialstreifen des Aufnahmekörpers (Figur 3) auf den Grundkörper 1.1 der Montageplatte 1 pressen. Selbstverständlich können entsprechende Presselemente auch in anderer Form oder an anderer Stelle vorgesehen sein, um den Materialstreifen beziehungsweise allgemein den Aufnahmekörper sicher zwischen der Montageplatte 1 und der Abdeckplatte 8 zu positionieren.

Die Rasthaken 10 rasten beim Aufstecken der Abdeckplatte 8 auf die Montageplatte 1 in die entsprechend größeren Öffnungen 5 der Vorsprünge 4 ein und die Zentrierstifte 11 greifen in die entsprechend kleineren Öffnungen 5 im Sinne einer Zentrierung der Abdeckplatte 8 auf der Montageplatte 1 ein. Zugleich umschließt die Umwandung 9 den Raum innerhalb der durch die Montageplatte 1 und die Abdeckplatte 8 gebildeten Konsole, in welchem die Rasthaken 10 positioniert sind, sodass ein Zugriff von außen auf die Rasthaken 10 verhindert wird und der eingerastete Zustand nicht ohne Zerstörung der Abdeckplatte 8 gelöst werden kann.

In der Figur 3 ist ein Ausführungsbeispiel für einen Aufnahmekörper 13 mit rechteckigem beziehungsweise quadratischen Umfang dargestellt, wobei an zwei gegenüberliegenden Seiten beziehungsweise Umfangsabschnitten desselben jeweils ein Materialstreifen 14 mit Durchbrüchen 15 befestigt, insbesondere angenäht ist, welche gegengleich zu den Vorsprüngen 4 auf der Montageplatte 1 gestaltet sind, um diese formschlüssig zu umgreifen. Die Materialstreifen 14 können entlang ihrer äußeren Ränder eine Verstärkung 16 aufweisen.

Jener flächige Bereich des Aufnahmekörpers 13, an welchem die Materialstreifen 14 angeschlossen sind, wird vorliegend als Aufnahmebereich 17 bezeichnet. Dieser ist zumindest einlagig, insbesondere jedoch auch zweilagig oder mehrlagig ausgebildet und vorzugsweise aus einem elastischen Material, insbesondere textilen Material hergestellt.

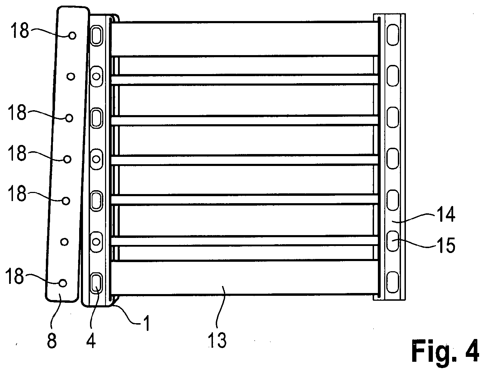

In der Figur 4 ist nochmals der Aufnahmekörper 13 mit seinen beiden Materialstreifen 14 dargestellt, wobei einer der beiden seitlichen Materialstreifen 14 gerade auf eine Montageplatte 1 aufgelegt wurde, bevor die zugehörige Abdeckplatte 8 auf die Montageplatte 1 aufgesteckt wurde.

In der Figur 4 erkennt man ferner eine der Anzahl von Rasthaken 10 (Figur 2) entsprechende Anzahl von Bohrlochansätzen 18. Beim Durchbohren der Abdeckplatte 8 in diesen Bohrlochansätzen 18 werden die Rasthaken 10 (Figur 2) zerstört, sodass die Abdeckplatte 8 wieder von der Montageplatte 1 abgehoben werden kann.

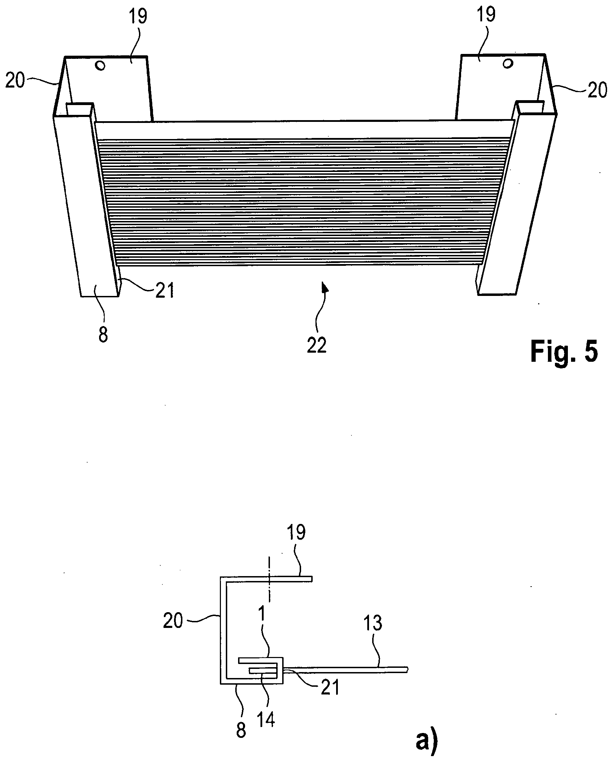

In der Figur 5 ist eine alternative Ausgestaltung der Erfindung gezeigt, bei welcher die Vorrichtung zur Aufnahme von Gebrauchsgegenständen eine Box ausbildet. Hierzu sind zwei Konsolen vorgesehen, die jeweils eine Basis 19 aufweisen, auf denen ein Steg 20 steht. Die Basis 19 liegt flach an einer hier nicht näher dargestellten Wand oder dergleichen an und ist an dieser befestigt, beispielsweise angeschraubt. Hierzu kann die Basis 19 entsprechende Bohrlöcher und/oder Einsenkungen aufweisen.

Im gezeigten Ausführungsbeispiel ist der Steg 20 einteilig an der Basis 19 angeschlossen und durch Umkanten eines Blechs hergestellt, sodass ein Teil des Blechs die Basis 19 und der umgekantete Teil des Blechs den Steg 20 ausbildet. Der Steg 20 trägt, hier durch weiteres Umkanten, einteilig die Montageplatte 1 und die Abdeckplatte 8 derart, dass diese einen Einschlussbereich für einen Materialstreifen 14 des Aufnahmekörpers 13 ausbilden, siehe hierzu besonders das Detail a mit einer schematischen Darstellung der Konsole in einer Ansicht von oben. Der Materialstreifen 14 ist zwischen der Montageplatte 1 und der Abdeckplatte 8 einer Konsole eingeklemmt. Im gezeigten Ausführungsbeispiel sind auch die Montageplatte 1 und die Abdeckplatte 8 durch weiteres Umkanten des Blechs, aus dem die Konsole hergestellt ist, erzeugt, sodass die gesamte Konsole einteilig aus gekantetem Blech hergestellt ist. Die Montageplatte 1 und die Abdeckplatte 8 einer Konsole sind über einen zweiten Steg 21 miteinander verbunden, der parallel zum (ersten) Steg 20 ausgerichtet ist, jedoch eine kürzere Erstreckung in Richtung der Basis 19 und eine Öffnung aufweist, durch welche der Aufnahmekörper 13, der hier einlagig ausgeführt ist, durchgeführt ist.

Am unteren Ende sind die beiden Konsolen über einen Boden 22 miteinander verbunden, um die durch die Vorrichtung zur Aufnahme von Gebrauchsgegenständen gebildete Box nach unten abzuschließen.

Bei diesem Ausführungsbeispiel ist es nicht notwendig, dass die Materialstreifen 14 Öffnungen oder Durchbrüche aufweisen, allerdings kann dies entsprechend dem zuvor dargestellten Ausführungsbeispiel vorgesehen sein. Die Materialstreifen 14 bewirken, dass sich der elastische Bereich des Aufnahmekörpers 13 gleichmäßig zwischen den beiden Konsolen spannt.

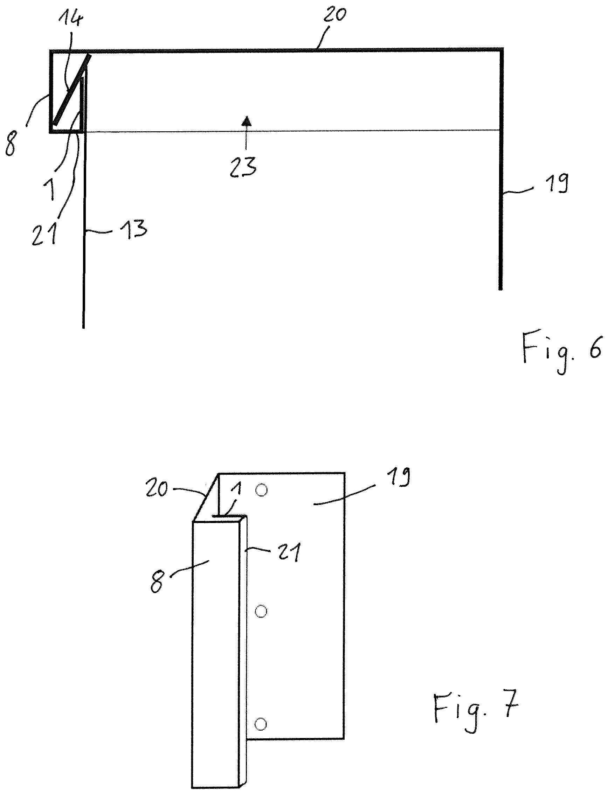

Das Ausführungsbeispiel gemäß der Figur 6 entspricht weitgehend jenem der Figur 5. Abweichend ist jedoch die Aufnahme beziehungsweise der Einschluss des Materialstreifens 14, an welchem der Aufnahmekörper 13 befestigt ist, zwischen der Montageplatte 1 und der Abdeckplatte 8 nicht eingespannt, sondern nur eingelegt und verkantet. So ist es gemäß dem Ausführungsbeispiel in der Figur 6 nicht notwendig, dass der zweite Steg 21 eine Öffnung aufweist, was zugleich jedoch nicht ausgeschlossen ist. Gemäß diesem Ausführungsbeispiel ist der Materialstreifen derart verkantet in den Einschlussbereich zwischen der Montageplatte 1 und der Abdeckplatte 8 eingelegt, dass zwar der Materialstreifen 14 zwischen der Montageplatte 1 und der Abdeckplatte 8, zumindest teilweise oder vollständig, positioniert ist, wohingegen der Aufnahmekörper 13 teilweise oder vollständig außerhalb dieses Einschlussbereichs auf der der Abdeckplatte 8 abgewandten Seite der Montageplatte 1 positioniert ist.

Die Konsole gemäß der Figur 6 weist ferner eine Auflage 23 zum Auflegen eines separaten Bodens (hier nicht dargestellt) auf.

In der Figur 7 ist die Konsole aus der Figur 6 nochmals in dreidimensionaler Ansicht gezeigt, wobei man auch die Bohrungen zum Festschrauben der Basis 19 an einer Wand oder dergleichen erkennt. Abweichend von der Darstellung könnte die Konsole in dem zweiten Steg 21 eine Öffnung aufweisen, um die Konsole in dem Ausführungsbeispiel gemäß der Figur 5 verwenden zu können.

## Patentansprüche

1. Vorrichtung zur Aufnahme von Gebrauchsgegenständen
1.1 mit einem flächigen Aufnahmekörper (13), der einen äußeren Umfang aufweist;
1.2 mit wenigstens einer Konsole zur Befestigung des Aufnahmekörpers (13) an einer Wand oder dergleichen; wobei
1.3 der Aufnahmekörper (13) taschenförmig ist oder eine seitliche Taschenwand ausbildet und einen Aufnahmebereich (17) aufweist, der die seitliche Taschenwand bildet oder der zwei aufeinander positionierte Taschenwände bildet, die entlang des äußeren Umfangs bis auf eine Eingriffsöffnung zur Ausbildung einer Tasche miteinander verbunden sind; wobei
1.4 die Konsole eine Montageplatte (1) und eine Abdeckplatte (8) aufweist oder aus diesen besteht, wobei die Abdeckplatte (8) reibschlüssig und/oder formschlüssig auf die Montageplatte (1) aufgesteckt oder aufsteckbar ist, derart, dass
1.5 der Aufnahmekörper (13) zumindest entlang von einem Abschnitt oder entlang von zwei einander gegenüberliegenden Abschnitten des äußeren Umfangs zwischen der Montageplatte (1) und der Abdeckplatte (8) eingeschlossen ist; **dadurch gekennzeichnet, dass**
1.6 der Aufnahmekörper (13) in dem oder den Abschnitten des äußeren Umfangs, der/die zwischen der Montageplatte (1) und der Abdeckplatte (8) eingeschlossen wird/werden, jeweils einen Materialstreifen (14) aufweist, der aus einem vom Aufnahmebereich (17) abweichenden Material hergestellt ist und sich entlang des entsprechenden Abschnitts des äußeren Umfangs erstreckt.

2. Vorrichtung zur Aufnahme von Gebrauchsgegenständen
2.1 mit einem flächigen Aufnahmekörper (13), der einen äußeren Umfang aufweist;
2.2 mit wenigstens einer Konsole zur Befestigung des Aufnahmekörpers (13) an einer Wand oder dergleichen; wobei
2.3 der Aufnahmekörper (13) taschenförmig ist oder eine seitliche Taschenwand ausbildet und einen Aufnahmebereich (17) aufweist, der die seitliche Taschenwand bildet oder der zwei aufeinander positionierte Taschenwände bildet, die entlang des äußeren Umfangs bis auf eine Eingriffsöffnung zur Ausbildung einer Tasche miteinander verbunden sind; wobei
2.4 die Konsole eine Montageplatte (1) und eine Abdeckplatte (8) aufweist, die einander zur Ausbildung eines Einschlussbereiches gegenüberstehen und einteilig oder mehrteilig miteinander und mit der Konsole ausgebildet sind, derart, dass
2.5 der Aufnahmekörper (13) zumindest entlang von einem Abschnitt oder entlang von zwei einander gegenüberliegenden Abschnitten des äußeren Umfangs zwischen der Montageplatte (1) und der Abdeckplatte (8) eingeschlossen ist; wobei
2.6 der Aufnahmekörper (13) in dem oder den Abschnitten des äußeren Umfangs, der/die zwischen der Montageplatte (1) und der Abdeckplatte (8) eingeschlossen wird/werden, jeweils einen Materialstreifen (14) aufweist, der aus einem vom Aufnahmebereich (17) abweichenden Material hergestellt ist und sich entlang des entsprechenden Abschnitts des äußeren Umfangs erstreckt, **dadurch gekennzeichnet dass**
2.7 die Konsole eine Basis (19) zur Befestigung an der Wand oder dergleichen sowie einen auf der Basis (19) aufrecht stehenden Steg (20) aufweist, weicher die Montageplatte (1) und die Abdeckplatte (8) entfernt von der Basis (19) trägt.

3. Vorrichtung gemäß Anspruch 2, **dadurch gekennzeichnet, dass** der Steg (20) senkrecht auf der Basis (19) steht und die Montageplatte (1) und die Abdeckplatte (8) parallel zu der Basis (19) trägt.

4. Vorrichtung gemäß einem der Ansprüche 1 bis 3, **dadurch gekennzeichnet, dass** wenigstens zwei Konsolen mit jeweils einer Montageplatte (1) und einer Abdeckplatte (8) vorgesehen sind, von denen jeweils eine einen der gegenüberliegenden Abschnitte des äußeren Umfangs des Aufnahmekörpers (13) einschließt, wobei die beiden Konsolen mit den Montageplatten (1) und den Abdeckplatten (8) in ihrer äußeren Formgebung insbesondere spiegelbildlich und/oder identisch zueinander gestaltet sind.

5. Vorrichtung gemäß einem der Ansprüche 1 bis 4, **dadurch gekennzeichnet, dass** sich jeweils ein einziger Materialstreifen (14) entlang jeweils des gesamten Abschnitts des äußeren Umfangs, der zwischen der Montageplatte (1) und der Abdeckplatte (8) eingeschlossen ist, erstreckt.

6. Vorrichtung gemäß einem der Ansprüche 1 bis 5, **dadurch gekennzeichnet, dass** der Aufnahmekörper (13) zumindest teilweise aus einem elastischen, insbesondere textilem Material hergestellt ist.

7. Vorrichtung gemäß Anspruch 6, **dadurch gekennzeichnet, dass** der Aufnahmebereich (17) aus einem elastischen, insbesondere textilen Material hergestellt ist und der oder die Materialstreifen (14) aus einem unelastischen Material hergestellt ist/sind.

8. Vorrichtung gemäß einem der Ansprüche 1 bis 7, **dadurch gekennzeichnet, dass** der oder die Materialstreifen (14) eine Vielzahl von entlang des Abschnitts des äußeren Umfangs des Aufnahmekörpers (13) hintereinander positionierte Durchbrüche (15) aufweist/aufweisen, die im eingeschlossenen Zustand der Materialstreifen (14) zwischen den Montageplatten (1) und den Abdeckplatten (8) in ihrer Gestaltung insbesondere gegengleiche Vorsprünge (4) der Montageplatten (1) und/oder der Abdeckplatten (8) unverlierbar umschließen.

9. Vorrichtung gemäß Anspruch 8, **dadurch gekennzeichnet, dass** die Montageplatte (1) eine Vielzahl von Vorsprüngen (4) aufweist, die jeweils durch eine aus der Montageplatte (1) herausragende Umfangswand (4.1) mit einer sich anschließenden Stirnseite (4.2) gebildet werden, wobei zumindest ein Vorsprung (4) an seiner Umfangswand (4.1) eine Rastnase (6) aufweist, an welcher der Materialstreifen (14) beim Überschieben des entsprechenden Durchbruches (5) auf den Vorsprung (4) einrastet.

10. Vorrichtung gemäß einem der Ansprüche 8 oder 9, **dadurch gekennzeichnet, dass** die Montageplatte (1) eine Vielzahl von Vorsprüngen (4) aufweist, die jeweils durch eine in der Montageplatte (1) herausragende Umfangswand (4.1) mit einer sich anschließenden Stirnseite (4.2) gebildet werden, wobei die Stirnseite (4.2) wenigstens eines Vorsprungs (4) eine Öffnung (5) aufweist, in welche ein Rasthaken (10) oder ein Zentrierstift (11) der Abdeckplatte (8), der auf einer der Montageplatte (1) zugewandten Oberfläche der Abdeckplatte (8) aus dieser herausragt, formschlüssig eingreift.

11. Vorrichtung gemäß Anspruch 10, **dadurch gekennzeichnet, dass** wenigstens ein erster Vorsprung (4) auf der Montageplatte (1) auf seiner Stirnseite (4.2) eine erste Öffnung (5) aufweist, in welche ein Rasthaken (10) der Abdeckplatte (8) im aufgesteckten Zustand der Abdeckplatte (8) auf die Montageplatte (1) eingreift, und ein zweiter Vorsprung (4) auf der Montageplatte (1) auf seiner Stirnseite (4.2) eine zweite Öffnung (5) aufweist, in welche ein Zentrierstift (11) die Abdeckplatte (8) im aufgesteckten Zustand der Abdeckplatte (8) auf die Montageplatte (1) eingreift.

12. Vorrichtung gemäß Anspruch 11, **dadurch gekennzeichnet, dass** die zweite Öffnung (5) einen kleineren Querschnitt als die erste Öffnung (5) aufweist und/oder die erste Öffnung (5) in ihrem Querschnitt oval oder eckig und die zweite Öffnung (5) in ihrem Querschnitt kreisrund ist.

13. Vorrichtung gemäß einem der Ansprüche 1 bis 12, **dadurch gekennzeichnet, dass** die Abdeckplatte (8) wenigstens einen oder eine Vielzahl von Rasthaken (10) aufweist, die angeordnet sind, um beim Aufstecken der Abdeckplatte (8) auf die Montageplatte (1) in Öffnungen (5) auf der Montageplatte (1) einzurasten, und/oder die Montageplatte (1) wenigstens einen oder eine Vielzahl von Rasthaken aufweist, die angeordnet sind, um beim Aufstecken der Abdeckplatte (8) auf die Montageplatte (1) in Öffnungen der Abdeckplatte (8) einzurasten, und die Rasthaken (10) im eingerasteten Zustand derart von einer äußeren Umwandung (9) der Abdeckplatte (8) und/oder der Montageplatte (1) in einem Innenraum der Konsole gegenüber der Umgebung abgeschirmt sind, dass ein zerstörungsfreier entrastender Zugriff von außen verhindert wird.

14. Vorrichtung gemäß Anspruch 13, **dadurch gekennzeichnet, dass** auf der äußeren Oberfläche der Abdeckplatte (8) und/oder der Montageplatte (1) wenigstens ein Bohrlochansatz (18) eingebracht ist, um durch Durchbohren der Abdeckplatte (8) und/oder der Montageplatte (1) in dem Bohrlochansatz (18) ein Entrasten des Rasthakens (10) zu ermöglichen.

15. Vorrichtung gemäß einem der Ansprüche 1 bis 14, **dadurch gekennzeichnet, dass** die Montageplatte (1) oder die Basis (19) eine Vielzahl von Einsenkungen (2) zur Aufnahme von Schraubenköpfen aufweist.

## Claims

1. A device for accommodating useful objects
1.1 comprising a sheet-like receptacle body (13), which has an outer circumference;
1.2 comprising at least one bracket for fastening the receptacle body (13) on a wall or the like; wherein
1.3 the receptacle body (13) is pocket-shaped or forms a lateral pocket wall and has a receptacle region (17), which forms the lateral pocket wall or which forms two pocket walls positioned on one another, which are connected to one another along the outer circumference except for an engagement opening for forming a pocket; wherein
1.4 the bracket has an installation plate (1) and a cover plate (8) or consists thereof, wherein the cover plate (8) is plugged or pluggable in a friction-locked and/or formfitting manner onto the installation plate (1), such that
1.5 the receptacle body (13) is enclosed between the installation plate (1) and the cover plate (8) at least along one section or along two sections opposite to one another of the outer circumference, **characterized in that**
1.6 the receptacle body (13) has, in each of the section or sections of the outer circumference which is/are enclosed between the installation plate (1) and the cover plate (8), a material strip (14) which is produced from a material deviating from the receptacle region (17) and extends along the corresponding section of the outer circumference.

2. A device for accommodating useful objects
2.1 comprising a sheet-like receptacle body (13), which has an outer circumference;
2.2 comprising at least one bracket for fastening the receptacle body (13) on a wall or the like; wherein
2.3 the receptacle body (13) is pocket-shaped or forms a lateral pocket wall and has a receptacle region (17), which forms the lateral pocket wall or which forms two pocket walls positioned on one another, which are connected to one another along the outer circumference except for an engagement opening for forming a pocket; wherein
2.4 the bracket has an installation plate (1) and a cover plate (8), which lie opposite to one another to form an enclosure region and are formed in one part or multiple parts with one another and with the bracket, such that
2.5 the receptacle body (13) is enclosed between the installation plate (1) and the cover plate (8) at least along one section or along two sections opposite to one another of the outer circumference, wherein
2.6 the receptacle body (13) has, in each of the section or sections of the outer circumference which is/are enclosed between the installation plate (1) and the cover plate (8), a material strip (14) which is produced from a material deviating from the receptacle region (17) and extends along the corresponding section of the outer circumference, **characterized in that**
2.7 the bracket has a base (19) for fastening on the wall or the like and a web (20), which stands upright on the base (19) and which supports the installation plate (1) and the cover plate (8) at a distance from the base (19).

3. The device according to Claim 2, **characterized in that** the web (20) stands perpendicularly on the base (19) and supports the installation plate (1) and the cover plate (8) parallel to the base (19).

4. The device according to any one of Claims 1 to 3, **characterized in that** at least two brackets each having an installation plate (1) and a cover plate (8) are provided, each one of which encloses one of the opposing sections of the outer circumference of the receptacle body (13), wherein the two brackets comprising the installation plates (1) and the cover plates (8) are in particular formed in a mirror image and/or identically to one another in the outer shaping thereof.

5. The device according to any one of Claims 1 to 4, **characterized in that** in each case a single material strip (14) extends along the entire section of the outer circumference which is enclosed between the installation plate (1) and the cover plate (8).

6. The device according to any one of Claims 1 to 5, **characterized in that** the receptacle body (13) is at least partially produced from an elastic, in particular textile material.

7. The device according to Claim 6, **characterized in that** the receptacle region (17) is produced from an elastic, in particular textile material and the material strip or strips (14) is/are produced from a non-elastic material.

8. The device according to any one of Claims 1 to 7, **characterized in that** material strip or strips (14) has/have a plurality of openings (15) positioned in succession along the section of the outer circumference of the receptacle body (13), which openings, in the enclosed state of the material strips (14) between the installation plates (1) and the cover plates (8), captively enclose in the formation thereof in particular symmetrically opposing projections (4) of the installation plates (1) and/or the cover plates (8).

9. The device according to Claim 8, **characterized in that** the installation plate (1) has a plurality of projections (4), which are each formed by a circumferential wall (4.1) protruding out of the installation plate (1) and comprise an adjoining end face (4.2), wherein at least one projection (4) has a catch lug (6) on its circumferential wall (4.1), on which the material strip (14) latches when the corresponding passage (5) is pushed over the projection (4).

10. The device according to any one of Claims 8 or 9, **characterized in that** the installation plate (1) has a plurality of projections (4), which are each formed by a circumferential wall (4.1) protruding out of the installation plate (1) and comprise an adjoining end face (4.2), wherein the end face (4.2) of at least one projection (4) has an opening (5), in which a catch hook (10) or a centering pin (11) of the cover plate (8), which protrudes out of the cover plate (8) on the surface thereof facing toward the installation plate (1), engages in a formfitting manner.

11. The device according to Claim 10, **characterized in that** at least one first projection (4) on the installation plate (1) has a first opening (5) on its end face (4.2), in which opening a catch hook (10) of the cover plate (8) engages in the plugged-on state of the cover plate (8) on the installation plate (1), and a second projection (4) on the installation plate (1) has a second opening (5) on its end face (4.2), in which a centering pin (11) of the cover plate (8) engages in the plugged-on state of the cover plate (8) on the installation plate (1).

12. The device according to Claim 11, **characterized in that** the second opening (5) has a smaller cross section than the first opening (5) and/or the first opening (5) is oval or polygonal in its cross section and the second opening (5) is circular in its cross section.

13. The device according to any one of Claims 1 to 12, **characterized in that** the cover plate (8) has at least one or a plurality of catch hooks (10), which are arranged to latch in openings (5) on the installation plate (1) when the cover plate (8) is plugged onto the installation plate (1), and/or the installation plate (1) has at least one or a plurality of catch hooks, which are arranged to latch in openings of the cover plate (8) when the cover plate (8) is plugged onto the installation plate (1), and the catch hooks (10) are shielded in the latched state by an outer circumferential wall (9) of the cover plate (8) and/or the installation plate (1) in an interior of the bracket in relation to the surroundings such that a nondestructive unlatching access from the outside is prevented.

14. The device according to Claim 13, **characterized in that** at least one borehole attachment (18) is introduced on the outer surface of the cover plate (8) and/or the installation plate (1), to enable unlatching of the catch hook (10) by drilling through the cover plate (8) and/or the installation plate (1) in the borehole attachment (18).

15. The device according to any one of Claims 1 to 14, **characterized in that** the installation plate (1) and/or the base (19) has a plurality of depressions (2) for accommodating screw heads.

## Revendications

1. Dispositif pour recevoir des objets utilitaires
1.1 avec un corps de logement (13) plat qui présente une circonférence extérieure ;
1.2 avec au moins une console pour la fixation du corps de logement (13) sur un mur ou similaire ; dans lequel
1.3 le corps de logement (13) est en forme de poche ou forme une paroi de poche latérale et présente une zone de logement (17) qui forme la paroi de poche latérale ou deux parois de poche positionnées l'une sur l'autre, qui sont reliées l'une à l'autre sur la circonférence extérieure à l'exception d'une ouverture d'entrée pour former une poche ; dans lequel
1.4 la console présente une plaque de montage (1) et une plaque de couverture (8) ou se compose de celles-ci, la plaque de couverture (8) étant ou pouvant être emboîtée par friction et/ou en correspondance de forme sur la plaque de montage (1), de telle manière que
1.5 le corps de logement (13) soit inclus au moins le long d'une partie ou le long de deux parties se faisant face de la circonférence extérieure entre la plaque de montage (1) et la plaque de couverture (8),
**caractérisé en ce que**
1.6 le corps de logement (13) présente dans la ou chacune des parties de la circonférence extérieure incluses entre la plaque de montage (1) et la plaque de couverture (8) une bande de matériau (14) qui est faite d'un matériau différent de la zone de logement (17) et qui s'étend le long de la partie correspondante de la circonférence extérieure.

2. Dispositif pour recevoir des objets utilitaires
2.1 avec un corps de logement (13) plan qui présente une circonférence extérieure ;
2.2 avec au moins une console pour la fixation du corps de logement (13) sur un mur ou similaire ; dans lequel
2.3 le corps de logement (13) est en forme de poche ou forme une paroi de poche latérale et présente une zone de logement (17) qui forme la paroi de poche latérale ou deux parois de poche positionnées l'une sur l'autre, qui sont reliées l'une à l'autre sur la circonférence extérieure à l'exception d'une ouverture d'entrée pour former une poche ; dans lequel
2.4 la console présente une plaque de montage (1) et une plaque de couverture (8) qui se font face pour former une zone d'inclusion et sont formées en une ou plusieurs pièces l'une avec l'autre et avec la console, de telle manière que
2.5 le corps de logement (13) soit inclus au moins le long d'une partie ou le long de deux parties se faisant face de la circonférence extérieure entre la plaque de montage (1) et la plaque de couverture (8),
2.6 le corps de logement (13) présentant dans la ou chacune des parties de la circonférence extérieure incluses entre la plaque de montage (1) et la plaque de couverture (8) une bande de matériau (14) qui est faite d'un matériau différent de la zone de logement (17) et qui s'étend le long de la partie correspondante de la circonférence extérieure,
**caractérisé en ce que**
2.7 la console présente une base (19) pour la fixation au mur ou similaire ainsi qu'une barrette (20) placée verticalement sur la base (19), qui porte la plaque de montage (1) et la plaque de couverture (8) à distance de la base (19).

3. Dispositif selon la revendication 2, **caractérisé en ce que** la barrette (20) est placée verticalement sur la base (19) et porte la plaque de montage (1) et la plaque de couverture (8) parallèlement à la base (19).

4. Dispositif selon l'une des revendications 1 à 3, **caractérisé en ce que** sont prévues au moins deux consoles avec chacune une plaque de montage (1) et une plaque de couverture (8), dont l'une renferme les parties se faisant face de la circonférence extérieure du corps de logement (13), les deux consoles avec les plaques de montage (1) et les plaques de couverture (8) ayant une forme extérieure en particulier symétrique en miroir et/ou identique.

5. Dispositif selon l'une des revendications 1 à 4, **caractérisé en ce qu'**une seule bande de matériau (14) s'étend sur toute la longueur de chaque partie de la circonférence extérieure qui est renfermée entre la plaque de montage (1) et la plaque de couverture (8).

6. Dispositif selon l'une des revendications 1 à 5, **caractérisé en ce que** le corps de logement (13) est fait au moins en partie d'un matériau élastique, en particulier textile.

7. Dispositif selon la revendication 6, **caractérisé en ce que** la zone de logement (17) est faite d'un matériau élastique, en particulier textile, et la ou les bandes de matériau (14) sont faites d'un matériau inélastique.

8. Dispositif selon l'une des revendications 1 à 7, **caractérisé en ce que** la ou les bandes de matériau (14) comportent plusieurs traversées (15) disposées les unes derrière les autres le long de la partie de circonférence extérieure du corps de logement (13), conformées de manière à entourer, lorsque les bandes de matériau (14) sont renfermées entre les plaques de montage (1) et les plaques de couverture (8), des saillies (4) des plaques de montage (1) et/ou des plaques de couverture (8), en particulier symétriques inversées.

9. Dispositif selon la revendication 8, **caractérisé en ce que** la plaque de montage (1) présente plusieurs saillies (4) qui sont formées chacune par une paroi de circonférence (4.1) dépassant de la plaque de montage (1) et à laquelle se raccorde une face frontale (4.2), au moins une saillie (4) présentant sur sa paroi de circonférence (4.1) un ergot d'enclenchement (6) sur lequel la bande de matériau (14) s'enclenche lorsque la traversée (5) correspondante est poussée sur la saillie (4).

10. Dispositif selon l'une des revendications 8 ou 9, **caractérisé en ce que** la plaque de montage (1) présente plusieurs saillies (4) qui sont formées chacune par une paroi de circonférence (4.1) dépassant de la plaque de montage (1) avec une face frontale (4.2) qui s'y raccorde, la face frontale (4.2) d'au moins une saillie (4) présentant une ouverture (5) dans laquelle un crochet d'enclenchement (10) ou une goupille de centrage (11) de la plaque de couverture (8), dépassant de celle-ci sur une surface de la plaque de couverture (8) tournée vers la plaque de montage (1), se met en prise en correspondance de forme.

11. Dispositif selon la revendication 10, **caractérisé en ce que** l'au moins une saillie (4) sur la plaque de montage (1) présente sur sa face frontale (4.2) une première ouverture (5) dans laquelle un crochet d'enclenchement (10) de la plaque de couverture (8) se met en prise quand la plaque de couverture (8) est posée sur la plaque de montage (1) et une deuxième saillie (4) sur la plaque de montage (1) présente sur sa face frontale (4.2) une deuxième ouverture (5) dans laquelle une goupille de centrage (11) de la plaque de couverture (8) se met en prise quand la plaque de couverture (8) est posée sur la plaque de montage (1).

12. Dispositif selon la revendication 11, **caractérisé en ce que** la deuxième ouverture (5) a une plus petite section que la première ouverture (5) et/ou la première ouverture (5) a une section ovale ou angulaire et la deuxième ouverture (5) a une section circulaire.

13. Dispositif selon l'une des revendications 1 à 12, **caractérisé en ce que** la plaque de couverture (8) présente au moins un ou plusieurs crochets d'enclenchement (10) qui sont disposés de façon à s'enclencher lors de la pose de la plaque de couverture (8) sur la plaque de montage (1) dans des ouvertures (5) sur la plaque de montage (1) et/ou **en ce que** la plaque de montage (1) présente au moins un ou plusieurs crochets d'enclenchement qui sont disposés de façon à s'enclencher lors de la pose de la plaque de couverture (8) sur la plaque de montage (1) dans des ouvertures de la plaque de couverture (8), et les crochets d'enclenchement (10) enclenchés sont protégés de l'environnement par une paroi d'entourage extérieure (9) de la plaque de couverture (8) et/ou de la plaque de montage (1) à l'intérieur de la console, de telle sorte qu'il ne soit pas possible d'y accéder de l'extérieur pour les déclencher sans les détruire.

14. Dispositif selon la revendication 13, **caractérisé en ce qu'**au moins une ébauche de perçage (18) est prévue sur la surface extérieure de la plaque de couverture (8) et/ou de la plaque de montage (1) pour permettre, par le perçage de la plaque de couverture (8) et/ou de la plaque de montage (1) dans l'ébauche de perçage (18), de déclencher le crochet d'enclenchement (10).

15. Dispositif selon l'une des revendications 1 à 14, **caractérisé en ce que** la plaque de montage (1) ou la base (19) présente plusieurs renfoncements (2) destinés à recevoir des têtes de vis.
